# EUROPEAN PATENT APPLICATION

(11) **EP 4 811 636 A1**
(43) Date of publication of application: **23.09.2026**
(21) Application number: 26161344.2
(22) Date of filing: 27.02.2026
(51) Int. Cl.: H02M 1/36, H02M 3/158, H02M 1/32, H02M 1/00, H02M 7/483

(54) **POWER CONVERTER**

(30) Priority: 20.03.2025 US 202519084924
(71) Applicant: Schneider Electric IT Corporation, Foxboro, MA 02035 (US)
(72) Inventor: NIELSEN, Henning Roar, 6000 KOLDING (DK)
(74) Representative: Lavoix

(57) **Abstract**

A switching system is presented that includes a first input node; an output node; a transformer having a first terminal, a second terminal, and a middle tap, the first terminal coupled to the first input node via a first switch, and the second terminal coupled to the first input node via a first diode; and a bidirectional switch coupled to the middle tap and to the output node.

## Description

### BACKGROUND

### 1. Field of the Disclosure

At least one example in accordance with the present disclosure relates generally to priming and resetting transformers in power converter systems.

### 2. Discussion of Related Art

Power devices, such as uninterruptible power supplies (UPSs), may be used to provide regulated, uninterrupted power for sensitive and/or critical loads, such as computer systems and other data-processing systems. Existing UPSs include online UPSs, offline UPSs, line-interactive UPSs, as well as others. UPSs may provide output power to a load. The output power may be derived from a primary source of power, such as a utility-mains source, and/or derived from a back-up source of power, such as an energy-storage device.

### SUMMARY

According to at least one aspect of the present disclosure, a switching system is presented, comprising: a first input node; an output node; a transformer having a first terminal, a second terminal, and a middle tap, the first terminal coupled to the first input node via a first switch, and the second terminal coupled to the first input node via a first diode; and a bidirectional switch coupled to the middle tap and to the output node.

In some examples, the bidirectional switch includes a first switching device having a first connection, a second connection, and a first control connection, and a second switching device having a third connection, a fourth connection, and a second control connection, the first connection being coupled to the middle tap, the second connection coupled to the third connection, and the fourth connection coupled to the output node. In some examples, the bidirectional switch includes a first diode having a first anode and a first cathode, the first anode coupled to the second connection and the first cathode coupled to the first connection, and a second diode having a second anode and a second cathode, the second anode coupled to the third connection and the second cathode coupled to the fourth connection. In some examples, the switching system further comprises a second input node; a second switch coupled between the second input node and the first terminal; and a second diode coupled between the second input node and the second terminal. In some examples, the bidirectional switch includes one or more bidirectional switch switching devices, and the first switch and second switch include one or more switch switching devices, the one or more switch switching devices having a higher voltage rating than the one or more bidirectional switch switching devices. In some examples, the switching system further comprises a first switch diode coupled in parallel with the first switch, the first switch diode having an anode coupled to the first terminal and a cathode coupled to the first input, and a second switch diode coupled in parallel with the second switch, the second switch diode having an anode coupled to the second input and a cathode coupled to the first terminal. In some examples, the switching system further comprises a second input node; a first output switch coupled between the output node and the first input node; and a second output switch coupled between the output node and the second input node. In some examples, the switching system further comprises a first switch diode coupled in parallel with the first output switch, the first switch diode having an anode coupled to the first terminal and a cathode coupled to the first input, and a second switch diode coupled in parallel with the second output switch, the second switch diode having an anode coupled to the second input and a cathode coupled to the first terminal. In some examples, the switching system further comprises a second input node; and a first impedance, a second impedance, and a third impedance, the first impedance coupled between the first input node and the second input node, the second impedance coupled between the first input node and the output node, and the third impedance coupled between the output node and the second input node. In some examples, the first impedance, the second impedance, and the third impedance each include at least one capacitor. In some examples, the switching system further comprises a second input node; a second switch coupled between the second input node and the first terminal; and a control system configured to control at least one of the first switch, the second switch, or the bidirectional switch. In some examples, the control system further includes: a first control input configured to receive a first control signal, a second control input configured to receive a second control signal, and an overvoltage limiter coupled to the bidirectional switch. In some examples, the overvoltage limiter includes a bidirectional diode coupled between first and second terminals of the bidirectional switch. In some examples, the overvoltage limiter includes a metal oxide varistor coupled between first and second terminals of the bidirectional switch. In some examples, the overvoltage limiter includes a control driver coupled to control connections of switching devices of the bidirectional switch; a first switch diode coupled to the first terminal of the bidirectional switch, a second switch diode coupled to the second terminal of the bidirectional switch, and a third switch diode coupled to the first switch diode and to the second switch diode; or one or more resistors coupled to the control connections of the switching devices of the bidirectional switch.

According to at least one aspect of the present disclosure, an inverter is presented, comprising one or more switching systems, each switching system respectively including a first input node, an output node, a transformer having a first terminal, a second terminal, and a middle tap, the first terminal coupled to the first input node, the second terminal coupled to the first input node, and the middle tap coupled to the output node via a bidirectional switch.

In some examples, each switching system of the one or more switching systems further respectively includes a second input node coupled to the first terminal and to the second terminal, and wherein the inverter further comprises: a positive input node; a negative input node; a midpoint node; a first capacitor coupled between the positive input node and the midpoint node; a second capacitor coupled between the negative input node and the midpoint node; a first switching device coupled between the first input node and the positive input node; a second switching device coupled between the first input node and the midpoint node; a third switching device coupled between the second input node and the midpoint node; and a fourth switching device coupled between the negative input node and the second input node. In some examples, the one or more switching systems include a first switching system and a second switching system, and wherein a second input node of the first switching system is coupled to a first input node of the second switching system. In some examples, the inverter further comprises a first switching device coupled to the output node of the first switching system; a second switching device coupled to the output node of the second switching system; and a voltage output node coupled between the first switching device and the second switching device.

According to at least one aspect of the present disclosure, a non-transitory computer-readable medium is presented, containing thereon computer-executable instructions that, when executed by at least one processor, cause the at least one processor to control a soft switching system including an inverter, a transformer, and a bidirectional switch, by: controlling the inverter to begin a startup sequence, the startup sequence including providing a startup voltage to the transformer and activating the bidirectional switch coupled to a middle tap of the transformer; and responsive to the startup sequence completing, causing a transformer core reset of the transformer, the transformer core reset including controlling the inverter to provide a reset voltage across the transformer for a first period of time, the reset voltage having a lower magnitude than the startup voltage, deactivating the bidirectional switch coupled to the middle tap of the transformer, and activating the bidirectional switch after an end of the first period of time.

### BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 illustrates a block diagram of a UPS according to an example;
FIG. 2 illustrates a block diagram of a UPS according to an example;
FIG. 3 illustrates a block diagram of a power converter according to an example;
FIG. 4 illustrates a circuit diagram of a power converter according to an example;
FIG. 5 illustrates a circuit diagram of a power converter according to an example;
FIG. 6 illustrates a graph depicting aspects of transformer operation according to an example;
FIG. 7A illustrates a circuit diagram of a switching system according to an example;
FIG. 7B illustrates a circuit diagram of a switching system according to an example;
FIG. 7C illustrates a circuit diagram of a switching system according to an example;
FIG. 7D illustrates a circuit diagram of a switching system according to an example;
FIG. 8 illustrates a circuit diagram of a power converter according to an example;
FIG. 9 illustrates a circuit diagram of a power converter according to an example; and
FIG. 10 illustrates a flowchart of a process for operating a power converter according to an example.

### DETAILED DESCRIPTION

Power systems can experience power losses during switching cycles. For example, a given switch may be closed (e.g., appreciably conducting current) during one cycle, and open (e.g., not appreciably conducting current) during a different cycle. Likewise, a switch may be opened and closed during a single power cycle, and so forth. During these switching operations, a power loss may occur. Such power losses may be referred to as switching losses, and may occur because a relatively high voltage and current may be present across a given switch as the switch turns on or off.

To reduce these losses, soft switching methods may be used. Soft switching methods incorporate impedances, such as capacitors and inductors, into the circuit-for example, capacitors may be coupled in parallel with the switch and/or inductors may be coupled in series with the switch. Nevertheless, soft switching systems may not function efficiently in some power topologies due to saturation issues.

For example, inductors can become saturated (as can transformers), and desaturating these inductors can be difficult at high switching frequencies because there is insufficient time for the corresponding switch (or switches) to remain in a given state for the inductor to desaturate. To illustrate this, consider a system that swings from positive to negative polarities during a given power cycle. During the positive polarity portion of the cycle, the inductor will charge. When the polarity switches to the negative polarity portion of the cycle, the voltage across the inductor may be reversed relative to during the positive portion of the cycle, and thus the inductor may begin to discharge energy. However, if the system switches back to the positive portion of the cycle too quickly, the inductor may not have fully discharged and thus, at the beginning of the next negative cycle, the inductor may retain more energy than it did during the first negative cycle, and so forth. The retention of energy by the inductor in this way may, in some examples, make the soft switching system less efficient and may reduce the efficiency and/or interfere with the operation of the power system.

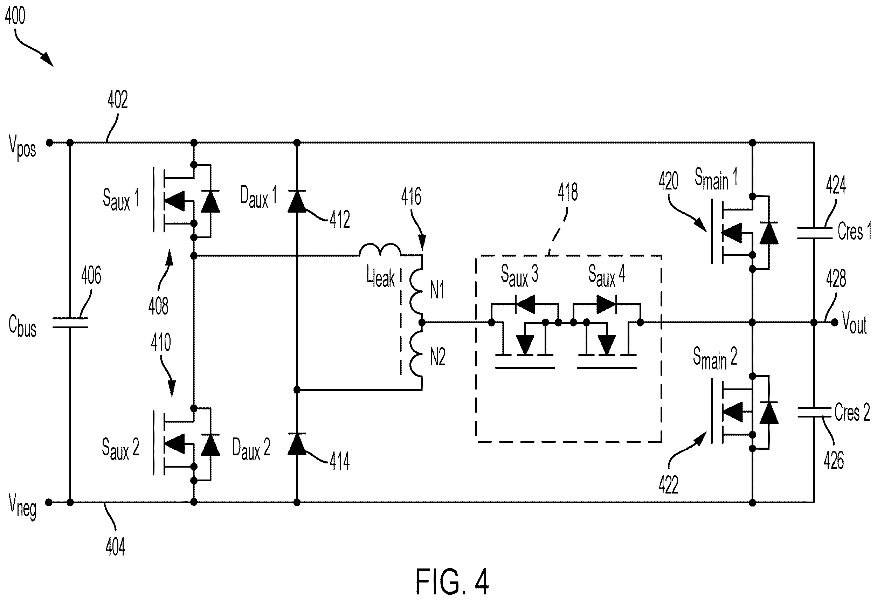

Aspects of the present disclosure relate to systems and methods for counteracting saturation of circuit components, including transformers, inductors, and so forth, in power systems, and for facilitating soft-switching of switches in power converters and/or similar devices. In some examples, a relatively large turn-on pulse may be provided to the inductor. The turn-on pulse may be provided, for example, by the inductor (or power converter, more generally), during a soft-switched turn on of the main output switches (for example, the third and fourth switching devices 434, 436 of FIG. 4). Then a lower magnitude, but longer lasting, reset pulse can be provided for a set period of time after the turn-on pulse to reset the inductor or transformer. The process of providing turn-on pulses and reset pulses may be repeated at arbitrary intervals. The length of the intervals may depend on the switching speed of the power converter. For example, the interval may be 1ms or less, 5ms or less, 10ms or less, and so forth.

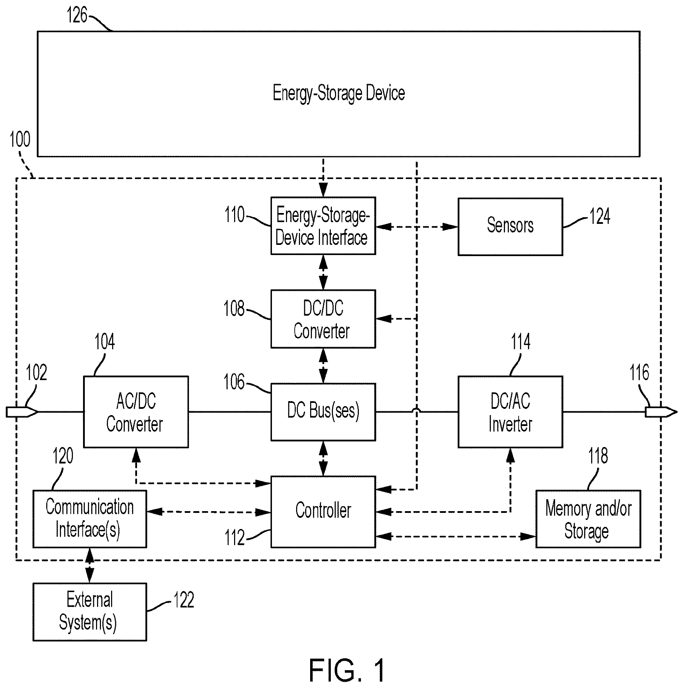

FIG. 1 is a block diagram of a UPS 100 according to an example. The UPS 100 includes an input 102, an AC/DC converter 104, one or more DC busses 106, a DC/DC converter 108, an energy-storage-device interface 110, at least one controller 112 ("controller 112"), a DC/AC inverter 114, an output 116, a memory and/or storage 118, one or more communication interfaces 120 ("communication interfaces 120"), which may be communicatively coupled to one or more external systems 122 ("external systems 122"), and one or more voltage sensors and/or current sensors 124 ("sensors 124").

The input 102 is coupled to the AC/DC converter 104 and to an AC power source (not pictured), such as an AC mains power supply. The AC/DC converter 104 is coupled to the input 102 and to the one or more DC busses 106, and is communicatively coupled to the controller 112. The one or more DC busses 106 are coupled to the AC/DC converter 104, the DC/DC converter 108, and to the DC/AC inverter 114, and are communicatively coupled to the controller 112. The DC/DC converter 108 is coupled to the one or more DC busses 106 and to the energy-storage-device interface 110, and is communicatively coupled to the controller 112. The energy-storage-device interface 110 is coupled to the DC/DC converter 108, and is configured to be coupled to at least one energy-storage device 126 and/or another energy-storage device.

In some examples, the UPS 100 may be external to the at least one energy-storage device 126 and may be coupled to the at least one energy-storage device 126 via the energy-storage-device interface 110. In various examples, the UPS 100 may include one or more energy-storage devices, which may include the energy-storage device 126. The energy-storage device 126 may include one or more batteries, capacitors, flywheels, or other energy-storage devices in various examples.

The DC/AC inverter 114 is coupled to the one or more DC busses 106 and to the output 116, and is communicatively coupled to the controller 112. The output 116 is coupled to the DC/AC inverter 114, and to an external load (not pictured). The controller 112 is communicatively coupled to the AC/DC converter 104, the one or more DC busses 106, the DC/DC converter 108, the energy-storage-device interface 110, the DC/AC inverter 114, the memory and/or storage 118, and the communication interfaces 120. The sensors 124 are communicatively coupled to the controller 112 and may be coupled to one or more other components of the UPS 100, such as the input 102, the AC/DC converter 104, the one or more DC busses 106, the DC/DC converter 108, the energy-storage-device interface 110, the DC/AC inverter 114, and/or the output 116.

The input 102 is configured to be coupled to an AC mains power source and to receive input AC power having an input voltage level. The UPS 100 is configured to operate in different modes of operation based on the input voltage of the AC power provided to the input 102. The controller 112 may determine a mode of operation in which to operate the UPS 100 based on whether the input voltage of the AC power is acceptable. The controller 112 may include or be coupled to one or more sensors, such as the sensors 124, configured to sense parameters of the input voltage. For example, the sensors 124 may include one or more voltage and/or current sensors coupled to the input 102 and being configured to sense information indicative of a voltage at the input 102 and provide the sensed information to the controller 112.

When AC power provided to the input 102 is acceptable (for example, by having parameters, such as an input voltage value, that meet specified values, such as by falling within a range of acceptable input voltage values), the controller 112 controls components of the UPS 100 to operate in a normal mode of operation. In the normal mode of operation, AC power received at the input 102 is provided to the AC/DC converter 104. The AC/DC converter 104 converts the AC power into DC power and provides the DC power to the one or more DC busses 106. The one or more DC busses 106 distribute the DC power to the DC/DC converter 108 and to the DC/AC inverter 114. The DC/DC converter 108 converts the received DC power and provides the converted DC power to the energy-storage-device interface 110. The energy-storage-device interface 110 receives the converted DC power, and provides the converted DC power to the energy-storage device 126 to charge the energy-storage device 126. The DC/AC inverter 114 receives DC power from the one or more DC busses 106, converts the DC power into regulated AC power, and provides the regulated AC power to the output 116 to be delivered to a load.

When AC power provided to the input 102 from the AC mains power source is not acceptable (for example, by having parameters, such as an input voltage value, that do not meet specified values, such as by falling outside of a range of acceptable input voltage values), the controller 112 controls components of the UPS 100 to operate in a backup mode of operation. In the backup mode of operation, DC power is discharged from the energy-storage device 126 to the energy-storage-device interface 110, and the energy-storage-device interface 110 provides the discharged DC power to the DC/DC converter 108. The DC/DC converter 108 converts the received DC power and distributes the DC power amongst the one or more DC busses 106. For example, the DC/DC converter 108 may evenly distribute the power amongst the one or more DC busses 106. The one or more DC busses 106 provide the received power to the DC/AC inverter 114. The DC/AC inverter 114 receives the DC power from the one or more DC busses 106, converts the DC power into regulated AC power, and provides the regulated AC power to the output 116.

In some examples, the sensors 124 may include one or more sensors coupled to one or more of the foregoing components such that a voltage and/or current of one or more of the foregoing components may be determined by the controller 112. The controller 112 may store information in, and/or retrieve information from, the memory and/or storage 118. For example, the controller 112 may store information indicative of sensed parameters (for example, input-voltage values of the AC power received at the input 102) in the memory and/or storage 118. The controller 112 may further receive information from, or provide information to, the communication interfaces 120. The communication interfaces 120 may include one or more communication interfaces including, for example, user interfaces (such as display screens, touch-sensitive screens, keyboards, mice, track pads, dials, buttons, switches, sliders, light-emitting components such as light-emitting diodes, sound-emitting components such as speakers, buzzers, and so forth configured to output sound inside and/or outside of a frequency range audible to humans, and so forth), wired communication interfaces (such as wired ports), wireless communication interfaces (such as antennas), and so forth, configured to exchange information with one or more systems, such as the external systems 122, or other entities, such as human beings. The external systems 122 may include any device, component, module, and so forth, that is external to the UPS 100, such as a server, database, laptop computer, desktop computer, tablet computer, smartphone, central controller or data-aggregation system, other UPSs, and so forth.

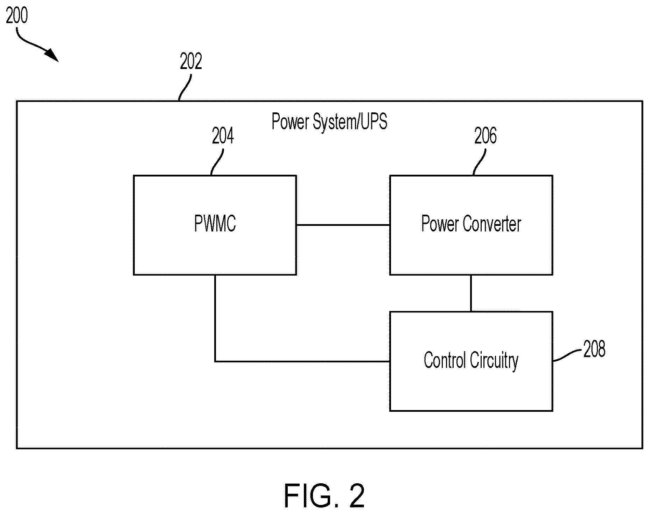

FIG. 2 illustrates a block diagram of a power system 200 according to an example. The power system 200 includes a UPS 202, which includes a pulse-width-modulation controller 204 ("PWMC 204"), a power converter 206, and control circuitry 208. The power system 200 may correspond to, for example, one or more of the AC/DC converter 104, DC busses 106, and/or DC/AC inverter 114 of FIG. 1. The PWMC 204 is coupled to the power converter 206 and to the control circuitry 208. The power converter 206 is coupled to the control circuitry 208.

The PWMC 204 may provide pulses of current and/or voltage to the power converter 206 and/or the control circuitry 208. The power converter 206 may use the pulses from the PWMC 204 as control signals and/or may convert the pulses from the PWMC 204 into an output voltage that may be provided to, e.g., a load. The output voltage may be time-varying or constant over a given time period (and thus may support AC or DC outputs).

The control circuitry 208 may be used to manage a soft switching system and/or to control the provision of a pull down signal (e.g., a pull down voltage or current) to the power converter 206, and may also be used to control an overvoltage protection system to protect the power converter 206 during switching operations.

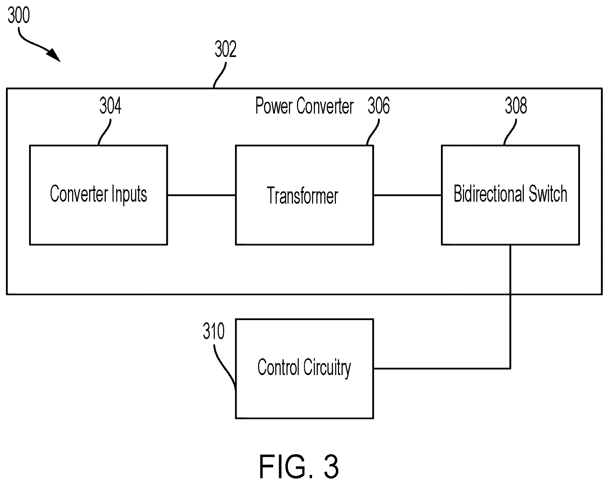

FIG. 3 illustrates a block diagram of a power system 300 according to an example. The power system 300 includes a power converter 302 and control circuitry 310. The power converter 302 may be an example of the power converter 206 and the control circuitry 310 may be an example of the control circuitry 208.

The power converter 302 includes converter inputs 304, a transformer 306, and a bidirectional switch 308. The bidirectional switch 308 may be used for desaturation and/or demagnetization of the transformer 306 and/or other components of the power converter 302.

The converter inputs 304 are coupled to the transformer 306. The transformer 306 is coupled to the bidirectional switch 308. The bidirectional switch 308 is coupled to the control circuitry 310.

The converter inputs 304 may receive an input signal from an external circuit element, such as a PWMC or driver thereof. The converter inputs 304 may route the input signal to the transformer 306, or the input signal may be used to control input voltages of the transformer 306. The transformer 306 may operate as a transformer to produce an output voltage based on the input voltage. That is, the transformer may experience an input voltage v(t) and produce an output voltage k·v(t) where k is greater than zero and v(t) is a voltage that may be expressed as a function of time (for example, a time-varying voltage).

The controller circuitry 310 may also receive signals from the external circuit element and may provide control signals to the bidirectional switch 308. The control signals provided by the control circuitry 308 may cause the bidirectional switch 308 and/or elements thereof to open or close as desired.

The bidirectional switch 308 may be selectively controlled to provide overvoltage protection to the power system 300 and in particular to the power converter 302. In particular, when the bidirectional switch 308 is off, the transformer 306 may generate a voltage across either of the primary and secondary windings of the transformer 306 that may be determined by a clamping voltage level, the clamping voltage level being based on other circuitry.

FIG. 4 illustrates a block diagram of a power converter 400 according to an example. The power converter 400 may be configured to provide an AC or DC output.

The power converter 400 includes a positive voltage node 402, a negative voltage node 404, a first capacitance 406, a first switching device 408, a second switching device 410, a first diode 412, a second diode 414, a transformer 416, a bidirectional switching device 418, a third switching device 420, a fourth switching device 422, a second capacitance 424, a third capacitance 426, and an output 428.

The first capacitance 406 is coupled between the positive voltage node 402 and the negative voltage node 404. The first switching device 408 is coupled between the positive voltage node 402 and a first input of the transformer 416. In some examples, a first connection of the first switching device 408 is coupled to the first input of the transformer 416, and a second connection is coupled to the positive voltage node 402. The second switching device 410 is coupled between the negative voltage node 404 and the first input of the transformer 416. In some examples, a first connection of the second switching device 410 is coupled to the negative voltage node 404, and a second connection is coupled to the first input of the transformer 416. The first diode 412 is coupled between a second input of the transformer 416 and the positive voltage node 402. In some examples, the cathode of the first diode 412 is coupled to the positive voltage rail 402, and the anode is coupled to the second input of the transformer 426. The second diode 414 is coupled between the second input of the transformer 416 and to the negative voltage node 404. In some examples, an anode of the second diode 414 is coupled to the negative voltage node 404, and the corresponding cathode is coupled to the second input of the transformer 416.

The third switching device 420 is coupled between the output 428 and the positive voltage rail 402. The fourth switching device 422 is coupled between the output 428 and the negative voltage rail 404. The second capacitance 424 is coupled between the output 428 and the positive voltage rail 402. The third capacitance 426 is coupled between the output 428 and the negative voltage rail 404.

The transformer 416 further includes a tap that is coupled to the bidirectional switch 418. The tap may be located anywhere between the first input and the second input of the transformer 416. The bidirectional switch 418 is coupled to the output 428.

The third and fourth switching devices 420, 422 in combination with the second and third capacitances 424, 426 enables soft-switching of the third and fourth switching devices 420, 422 during the turn-off process. The soft-switching during turn-off is enabled, at least in part, by the parallel combination of the third switching device 420 and the second capacitance 424, and the parallel combination of the fourth switching device 422 and the third capacitance 426. However, these parallel combinations of the third and fourth switching devices 420, 422 and their respective second or third capacitances 424, 426 do not enable soft-switching during turn-on. Soft-switching during turn-on is enabled by the first and second switching devices 408, 410, the first and second diodes 412, 414, the transformer 416, and the bidirectional switch 418.

To assist with soft-switching, a turn-on pulse and a reset pulse may be used. The turn-on pulse may be a relatively large pulse provided over a short period of time (for example, a high voltage or high current pulse with a short duration), and the reset pulse may be a relatively small pulse provided over a longer period of time compared to the turn-on pulse (for example, a low voltage or low current pulse with a long duration). The total volt-second-area and/or energy of the turn-on pulse and reset pulse may be equal or approximately equal.

To enable soft-switching during turn-on, the bidirectional switch 418 may be on (e.g., closed) for a short period of time corresponding to the duration of the turn-on pulse. Depending on the desired polarity of the turn-on pulse, one of either the first switching device 408 (for a positive polarity) or the second switching device 410 (for a negative polarity) may be turned on, while the other is turned off. When the duration of the turn-on pulse expires (e.g., after a short period of time, such as 5ms or less), the bidirectional switch 418 may be turned off (e.g., opened) and the reset pulse may be provided.

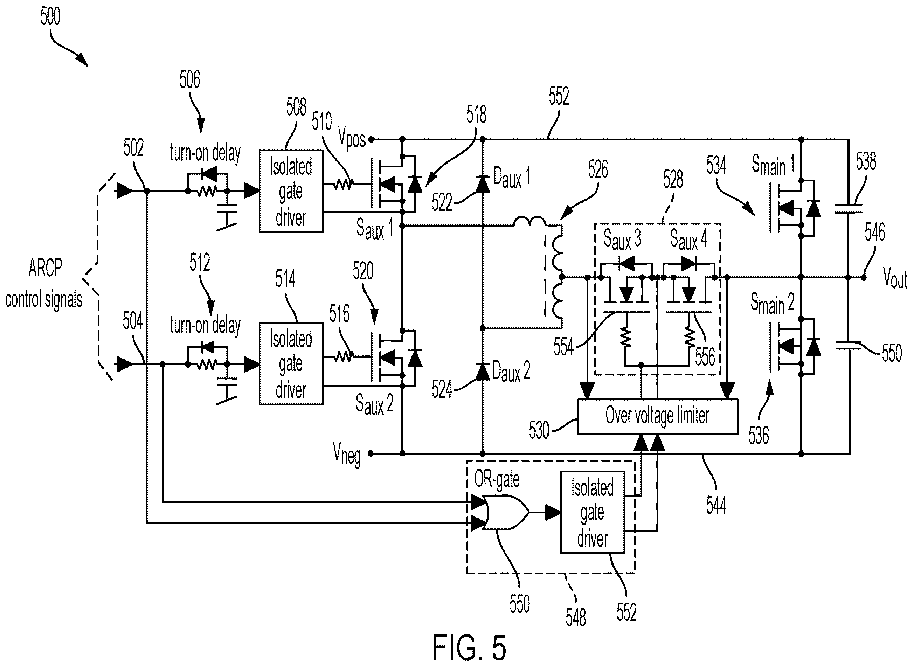

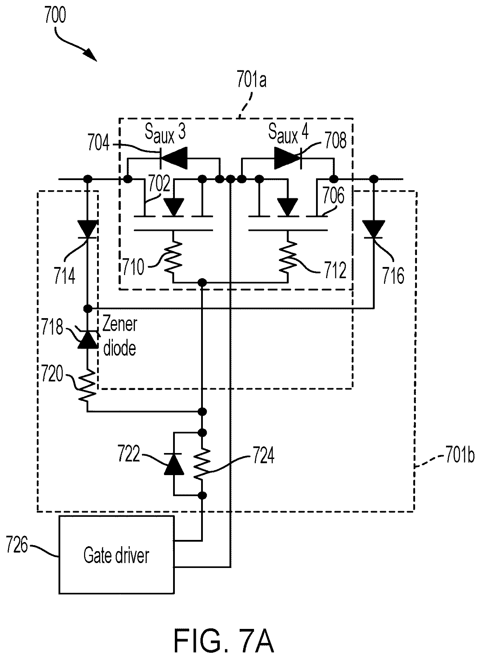

The reset pulse may (but sometimes may not) result in a voltage across the bidirectional switch 418 that exceeds the bidirectional switch's 418 rated voltage. Overvoltage protection may be provided to the bidirectional switch 418 to protect the bidirectional switch 418 if the bidirectional switch 418 experiences a voltage that exceeds the rated voltage. Overvoltage protection is described at greater length with respect to FIGS. 5 and 7A-7D.

The transformer 416 may swing between the voltages of the positive and negative voltage nodes 402, 404 depending on which is selectively coupled to the first input of the transformer 416 by the first switching device 408 and second switching device 410. Accordingly, the transformer 416 may experience a period where there is a large voltage differential across the transformer 416 (the differential being, in some examples, as great as the difference between the voltage of the positive voltage node 402 and negative voltage node 404) when the bidirectional switch 418 is on. This period may correspond to the turn-on pulse. When the bidirectional switch 418 is off, a reset pulse can be provided with a lower voltage. In this way, the power converter 400 may receive a large initial turn-on pulse followed by a lower (in magnitude) reset pulse, wherein the volt-second-area of both pulses may be the same.

FIG. 5 illustrates a block diagram of a power converter 500 according to an example. The power converter 500 may be an example of the power converter 206 and/or 302. The power converter 500 includes a first input 502, a second input 504, a first delay circuit 506, a first gate driver 508, a first gate resistor 510, a second delay circuit 512, a second gate driver 514, a second gate resistor 516, a first switching device 518, a second switching device 520, a first diode 522, a second diode 524, a transformer 526, a bidirectional switch 528, an overvoltage limiter 530, a third switching device 534, a fourth switching device 536, a first capacitance 538, a second capacitance 550, a positive voltage node 552, a negative voltage node 544, and an output 546. Control circuitry 548 is also shown, including an OR-gate 550 and a third gate driver 552.

The first input 502 is coupled to the delay circuit 506 and a first input of the OR-gate 550. The second input 504 is coupled to the second delay circuit 512 and a second input of the OR-gate 550. The first delay circuit 506 is coupled to the first gate driver 508. The first gate driver 508 is coupled to the first gate resistor 508 and to a first input of the transformer 526. The second delay circuit 512 is coupled to the second driver 514. The second driver 514 is coupled to the second gate driver 516 and to the negative voltage node 544. The first gate resistor 510 is coupled to a control connection for the first switching device 518. The second gate resistor 516 is coupled to a control connection for the second switching device 520.

The first switching device 518 has a first connection coupled to the first input of the transformer 526 and a second connection coupled to the positive voltage node 552. The second switching device 520 has a first connection coupled to the negative voltage node 544 and a second connection coupled to the first input of the transformer 526.

The first diode 522 is coupled to a second input of the transformer 526 and the positive voltage input 552. In some examples, the cathode of the first diode 522 is coupled to the positive voltage node 552 and an anode coupled to the first input of the transformer 526. The second diode 524 is coupled to the negative voltage node 544 and the second input of the transformer 526. In some examples, the cathode of the first diode 524 is coupled to the second input of the transformer 526 and an anode coupled to the negative voltage node 544.

The third switching device 534 is coupled to the output 546 and to the positive voltage node 552. In some examples, a first connection of the third switching device 534 is coupled to the output 546 and a second connection is coupled to the positive voltage node 552. The fourth switching device 536 is coupled between the negative voltage node 544 and the output 546. In some examples, a first connection of the fourth switching device 536 is coupled to the negative voltage node 544 and a second connection is coupled to the output 546.

The first capacitor 538 is coupled between the output 546 and the positive voltage node 552. The second capacitor 550 is coupled between the negative voltage node 544 and the output 546.

As previously mentioned, the transformer 526 has first and second inputs. The transformer 526 may also have a tap situated anywhere between the first input and second input and coupled to the bidirectional switch 528 and the overvoltage limiter 530. The bidirectional switch 528 is coupled to the overvoltage limiter 530 and to the output 546. The overvoltage limiter 530 is also coupled to the output 546.

An output of the OR-gate 550 is coupled to the third gate driver 552. The third gate driver 552 is coupled to the overvoltage limiter 530.

As illustrated, the bidirectional switch 528 includes various transistors, resistors, and diodes. These are exemplary, and will be discussed in greater detail with respect to FIGS. 7A-7D.

The inputs 502, 504 provide signals to the power converter 500. For example, the inputs 502, 504 may be coupled to the outputs of the PWMC 204 of FIG. 2. The delay circuits 506, 512 provide a delay to the propagation of signals from the inputs 502, 504 before those signals are provided to the first gate driver 508 and second gate driver 514. In one example, the delay circuits 506, 512 each include respective diodes, resistors, and capacitors. The first gate driver 508 generates two signals, a first signal that is provided to the first gate resistor 510 and then to the control connection of the first switching device 518 to control the state (e.g., on or off) of the first switching device 518, and a second signal that is provided to the first input of the transformer 526.

The second gate driver 514 is configured to provide a first signal to the second gate resistor 516 and then to the control connection of the second switching device 520, to control the state (e.g., on or off) of the second switching device 520, and a second signal to the negative voltage node 544.

The first switching device 518 is configured to selectively couple the positive voltage node 552 to the first input of the transformer 526. The second switching device 520 is configured to selectively couple the negative voltage node 544 to the first input of the transformer 526. The third switching device 534 is configured to selectively couple the positive voltage node 552 to the output 546. The fourth switching device 536 is configured to selectively couple the negative voltage node 544 to the output 546.

The OR-gate 550 functions as an OR-gate and outputs a logical HIGH signal to the third gate driver 552 when at least one logical HIGH input signal is being received from the first input 502 and/or the second input 504. The third gate driver 552 is configured to output a first signal and a second signal to the overvoltage limiter 530. The function of the overvoltage limiter 530 will be discussed with respect to FIGS. 7A-7D.

The transformer 526 has a tap that is configured to provide a voltage (or other signal) to the bidirectional switch 528 and/or overvoltage limiter 530. The transformer 526 may include one or more windings, each winding having a respective, not necessarily equal, number of turns. Each winding may include zero or more turns.

The bidirectional switch 528 may be used to selectively couple the output 546 and the tap of the transformer 526. In the example illustrated in FIG. 5, the bidirectional switch 528 includes a first switch 554 and a second switch 556. Additional examples of the bidirectional switch 528 are illustrated in FIGS. 7A-7D. In the example of FIG. 4, when both switches 554, 556 are on (that is, closed and conducting), the tap of the transformer 526 and the output 546 are directly connected (for example, shorted together). When the first switch 554 is on and the second switch 556 is off (that is, open and non-conducting), then current may go from the tap to the output 546 through the closed first switch 554 and the body diode of the second switch 556. When the first switch 554 is off and the second switch 556 is on, then current may go from the output 546 to the tap through the closed second switch 556 and the body diode of the first switch 554.

When the bidirectional switch 528 is on (e.g., closed and/or conducting), the turn-on pulse may be applied to the transformer 526, resulting in a relatively large voltage differential across the transformer 526 and a relatively large pulse of current conducting through the bidirectional switch 528 and at least part of the transformer 526 to and/or from the output node 546. In this manner, a large turn-on pulse can be produced.

When the bidirectional switch 528 is off (e.g., open and/or non-conducting), the tap of the transformer 526 may be floating. The transformer 526 may generate the reset pulse from the energy stored in the transformer 526. For example, the reset pulse may be a low amplitude pulse of longer duration than the turn-on pulse. However, even though the amplitude of the reset pulse may be low, there is still a chance that the voltage of the reset pulse could be higher than the rated voltage of the bidirectional switch 528. The overvoltage limiter 530 provides overvoltage protection for the bidirectional switch 528 so that the bidirectional switch 528 may be resilient even when potentially exposed to a voltage greater than the rated voltage of the bidirectional switch 528.

For example, the overvoltage limiter 530 may by a "voltage clamp," a switching device, a resistor, and so forth. FIGS. 7A-7D disclose non-exhaustive examples of overvoltage limiters. In other examples, other implementations of overvoltage limiters that provide suitable protection may be used. Such overvoltage limiters may prevent a voltage from damaging the bidirectional switch 528.

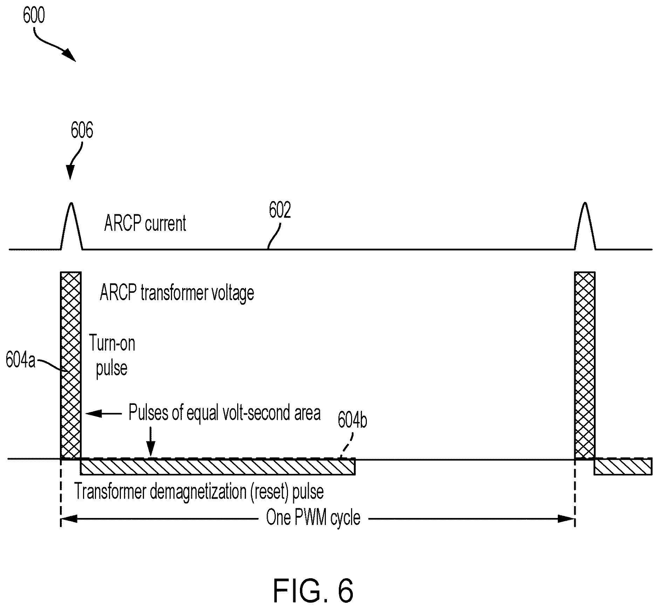

The voltage across the bidirectional switch 528 may be clamped to a desired maximum voltage using the overvoltage limiter 530, thereby allowing the energy outflow from the transformer 526 to be limited to a maximum rate per second (e.g., a maximum volt-second-area). In some examples, the total volt-second-area of the turn-on pulse and the reset pulse will be equal, except that the turn-on pulse will have a higher magnitude than the reset pulse, and the reset pulse will have a longer duration than the turn-on pulse. FIG. 6 discusses this in more detail.

FIG. 6 illustrates a graph 600 of a turn-on pulse and a reset pulse according to an example. The graph 600 has two traces, a first trace 602 and a second trace with a first part 604a and a second part 604b. In the following discussion, reference may be made to elements of either FIGS. 4 or 5 to illustrate what the traces indicate.

The first trace 602 shows a current level during a PWM cycle, where the current level increases and then decreases during a first period of time 606. The depicted current pulse corresponding to the first trace 602 is the current flowing from the tap of a transformer (for example, either of the transformers 416, 526), thorough a bidirectional switch (for example, either of the bi-directional switches 418, 528), and into an output node (for example, either of the output nodes 428, 546). The first period of time 606 may correspond to the turn-on (or startup) time for the power converters and/or UPSs discussed herein.

The second trace illustrates a voltage across a transformer (for example, one of the transformers 416, 526). The first part 604a of the second trace corresponds to when the transformer experiences the large voltage of the turn-on pulse. The second part 604b of the second trace corresponds to when the transformer experiences the reset pulse. That is, the first part 604a may correspond to some of the times when the bidirectional switch (for example, one of the bidirectional switches 418, 528) discussed herein are off, and the second part 604b may correspond to some of the times when the bidirectional switch is on.

The area under the first part 604a is equal or approximately equal (e.g., within approximately 5%) of the area over the second part 604b. That is, both have equal or approximately equal volt-second-areas. Accordingly, the energy gained during the first part 604a may be offset by the reverse bias of the second part 604b such that the transformer is fully desaturated (e.g., demagnetized).

FIGS. 7A-7D illustrates circuit diagrams of switching systems that correspond to the bidirectional switch 528 of FIG. 5, the overvoltage limiter 530 of FIG. 4, and the isolated gate driver 552 of FIG. 5. Each of FIGS. 7A-7D include a bidirectional switch that corresponds to the bidirectional switch 528, each includes an overvoltage limiter that corresponds to the overvoltage limiter 530, and each includes a gate driver which corresponds to the gate driver 552. Each of FIGS. 7A-7D further describe various internal configurations and designs for these parts.

FIG. 7A illustrates a circuit diagram of a switching system 700 according to an example. The switching system 700 includes a bidirectional switch 701a, an overvoltage limiter 701b, and a gate driver 726. The bidirectional switch 701a includes a first transistor 702, a first diode 704, a second transistor 706, a second diode 708, a first resistor 710, and a second resistor 712. The overvoltage limiter 701b includes a third diode 714, a fourth diode 716, a fifth diode 718, a third resistor 720, a sixth diode 722, and a fourth resistor 724.

The first transistor 702 has a first connection coupled to the first diode 704 and third diode 714, a second connection coupled to the second transistor 706, first diode 704, second diode 708, and gate driver 726, and a control connection coupled to the first resistor 710. The second transistor 706 has a first connection coupled to the fourth diode 716 and to the second diode 708, and a second connection coupled to the second connection coupled to the second connection of the first transistor 702, the first diode 704, second diode 706, and gate driver 726. The second transistor 706 has a control connection coupled to the second resistor 712. The first diode 704 has a cathode coupled to the first connection of the first transistor 704, and an anode coupled to the second connection of the first transistor 702. The second diode 708 has a cathode coupled to the first connection of the second transistor 706, and an anode coupled to the second connection of the second transistor 706. The third diode 714 has an anode coupled to the first connection of the first transistor 702, and a cathode coupled to the cathode of the fifth diode 718 and to the cathode of the fourth diode 716. The fourth diode 716 has an anode coupled to the first connection of the second transistor 706, and a cathode coupled to the cathodes of the third diode 714 and fifth diode 718. The fifth diode 718 has an anode coupled to the third resistor 720. The third resistor 720 is coupled to a cathode of the sixth diode 722, the fourth resistor 724, and to the first resistor 710 and second resistor 712. The sixth resistor 724 is coupled to the gate driver 726, and an anode of the sixth diode 722 is coupled to the gate driver 726. The gate driver 726 has two outputs, a first output coupled to the sixth diode 722 and fourth resistor 724, and a second output coupled to the second connections of the first transistor 702 and second transistor 706. The gate driver 726 may correspond to the gate driver of the control circuitry 448 of FIG. 3.

The fifth diode 718 may be a Zener diode.

The gate driver 726 may directly control a voltage at the second connections of the first transistor 702 and second transistor 706 by asserting a signal (such as a voltage signal) at the gate driver's 726 second output. In this way, the gate driver 726 may manipulate a level of the voltage at the second connections of the first transistor 702 and second transistor 706, for example, by increasing or decreasing that voltage.

The gate driver 726 may also assert a signal at the first output of the gate driver 726. This signal, which may be a voltage, can propagate through the sixth diode 722 and/or fourth resistor 724 to the first resistor 710 and second resistor 712, and therefore to the control connections of the first transistor 702 and second transistor 706. By asserting the signal at the first output of the gate driver 726 the gate driver 726 can therefore control whether the first transistor 702 and/or second transistor 706 are on or off.

Likewise, as voltages at the first connection of the first transistor 702 and/or the first connection of the second transistor 706 (these voltages, in some examples, respectively corresponding to the tap voltage of the transformer 426 and the output voltage of the output 446) fluctuate, the third diode 714 and/or fourth diode 716 may begin to conduct a forward current. If that forward current results in a high enough voltage at the cathode of the fifth diode 718, the fifth diode 718 may begin to conduct a reverse current, with the amperage of the reverse current being determined at least in part by the resistance of the third resistor 720.

The reverse current may then affect the voltage present at the cathode of the sixth diode 722 (e.g., raising or reducing said voltage), and therefore may affect the voltage at the control connections of the first transistor 702 and/or second transistor 706. Accordingly, the gate driver 726 can control (or contribute to controlling) the state (that is, on or off) of the first transistor 702 and second transistor 706, and the reverse current from the fifth diode 718 caused by the voltages at the first connection of the first transistor 702 and/or second transistor 706 may also control (or contribute to controlling) the state of the first transistor 702 and/or second transistor 706.

Finally, the gate driver 726 may also contribute to the voltages at the first connections of the first transistor 702 and/or second transistor 706. If the gate driver 726 raises the voltage at the second connections of the first transistor 702 and/or second transistor 706 to be greater than the voltage at one or more of the respective first connections of said transistors 702, 706, then a current may conduct from the second connections to one or more of the first connections of the first transistor 702 and/or second transistor 706.

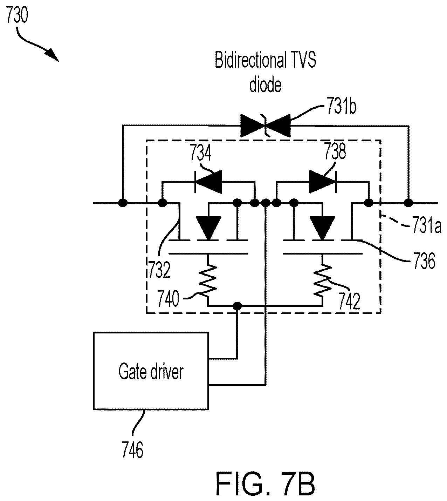

FIG. 7B illustrates a circuit diagram of a switching system 730 according to an example. The switching system 730 includes a bidirectional switch 731a, an overvoltage limiter 731b, and a gate driver 746. The bidirectional switch 731a includes a first transistor 732, a first diode 734, a second transistor 736, a second diode 738, a first resistor 740, and a second resistor 742.

A first connection of the first transistor 732 is coupled to a first connection of the overvoltage limiter 731b and to a cathode of the first diode 734. A second connection of the first transistor 732 is coupled to an anode of the first diode 734, to a second connection of the second transistor 736, and to a second output of the gate driver 746. The second connection of the second transistor 736 is coupled to an anode of the second diode 738, to the second connection of the first transistor 732, and to the second output of the gate driver 746. A first connection of the second transistor 736 is coupled to the cathode of the second diode 738 and to a second connection of the overvoltage limiter 731b. A control connection of the second transistor 736 is coupled to the second resistor 724. A first output of the gate driver is coupled to the first resistor 740 and to the second resistor 742.

The overvoltage limiter 731b may be, in some examples, a bidirectional transient-voltage-suppression (TVS) diode, and may therefore permit current to conduct to and/or from the first connection of the first transistor 732 to and/or from the first connection of the second transistor 736 depending on whether a voltage difference between voltage levels at the first connections of the first and second transistors 732, 736 exceeds the breakdown voltages of the overvoltage limiter 731b.

The gate driver 746 may assert signals on the first output and/or second output of the gate driver 746, and may therefore affect voltage levels at the second connections of the first transistor 732 and second transistor 736, and/or voltage levels at the resistors 740, 742, and may therefore control the state (that is, on or off) of the transistors 732, 736 of the bidirectional switch 731a.

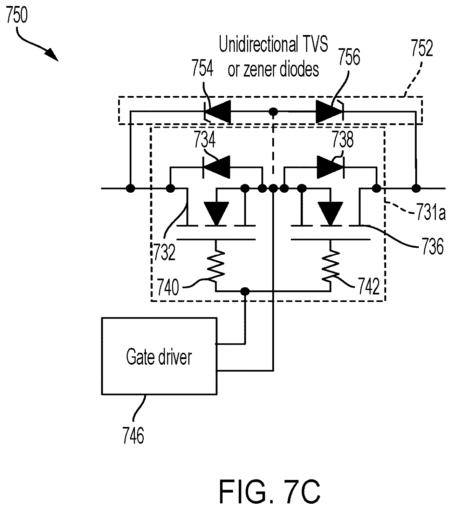

FIG. 7C illustrates a switching system 750 according to an example. The switching system 750 is identical to the switching system 730 of FIG. 7B except that the first connections of the first transistor 732 and second transistor 736 are no longer coupled to the overvoltage limiter 731b of FIG. 7B and the cathodes of the first diode 734 and second diode 738 are no longer coupled to the overvoltage limiter 731b. Instead, the first connection of the first transistor 732 is coupled to a cathode of a third diode 754 of an overvoltage limiter 752. The first connection of the second transistor 736 is likewise coupled to a cathode of a fourth diode 756 of the overvoltage limiter 752. The anodes of the third diode 754 and fourth diode 756 may be coupled together, and may optionally be coupled to the second connections of the first transistor 732 and second transistor 736. The cathode of the first diode 734 is coupled to the cathode of the third diode 754, and the cathode of the second diode 738 is coupled to the cathode of the fourth diode 756.

The third diode 754 and fourth diode 756 may, in some examples, be unidirectional TVS or Zener diodes.

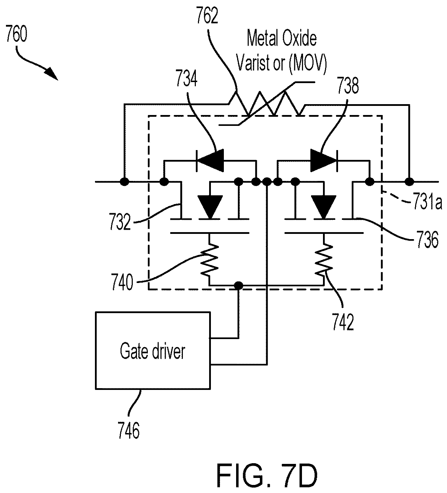

FIG. 7D illustrates a block diagram of a switching system 760 according to an example. The switching system 760 is identical to the switching system 730 of FIG. 7B except that that first connections of the first transistor 732 and second transistor 736 are no longer coupled to the overvoltage limiter 731b of FIG. 7B and the cathodes of the first diode 734 and second diode 738 are no longer coupled to the overvoltage limiter 731b. Instead, a first connection of an overvoltage limiter 762 is coupled to the cathode of the first diode 734 and to the first connection of the first transistor 732, and a second connection of the overvoltage limiter 762 is coupled to the cathode of the second diode 738 and to the first connection of the second transistor 736.

The overvoltage limiter 762 may be a metal oxide varistor.

In practice, each of the overvoltage limiters 701b, 731b, 752, and 762 perform the same function of clamping the voltage across the bidirectional switches 701a, 731a of the switching systems 700, 730, 750, 760. The voltage clamping function arises from the fact that the overvoltage limiters 701b, 731b, 752, 762 are coupled in parallel with the bidirectional switches 701a, 731a and therefore both the overvoltage limiters 701b, 731b, 752, 762 and the bidirectional switches 701a, 731a must have the same voltage drop. The differences between the approaches mainly relate to the number of parts required (e.g., the overvoltage limiter 701b may have more parts than the overvoltage limiter 731b), the size of the pieces, and electrical characteristics associated with the particular type of part (for example, the bidirectional TVS diode has a different voltage-current characteristic curve than a lone Zener diode), and/or the temperature-dependence of the part. For practical purposes, any of the approaches of FIGS. 7A-7D may be used in various embodiments.

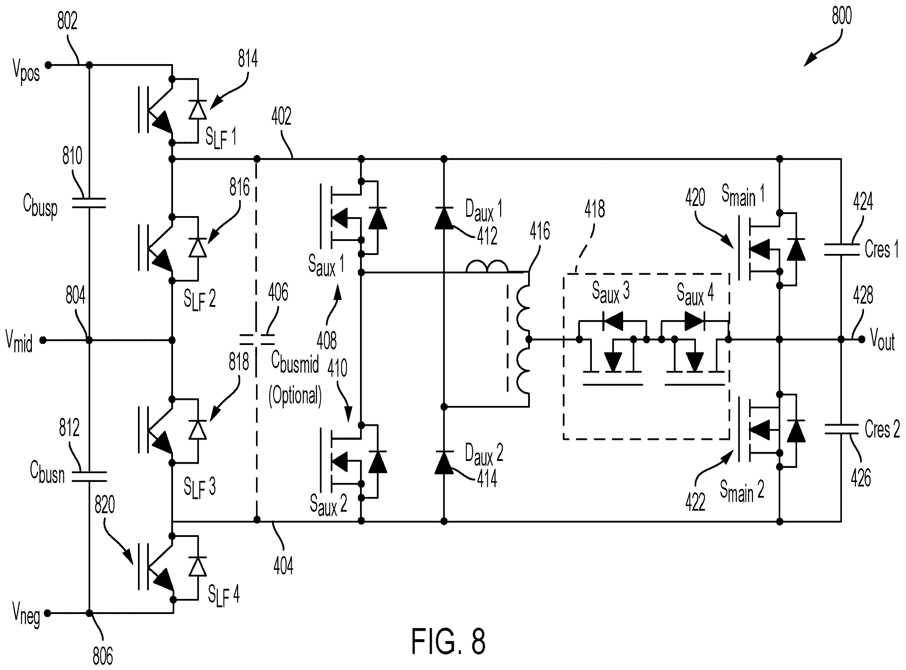

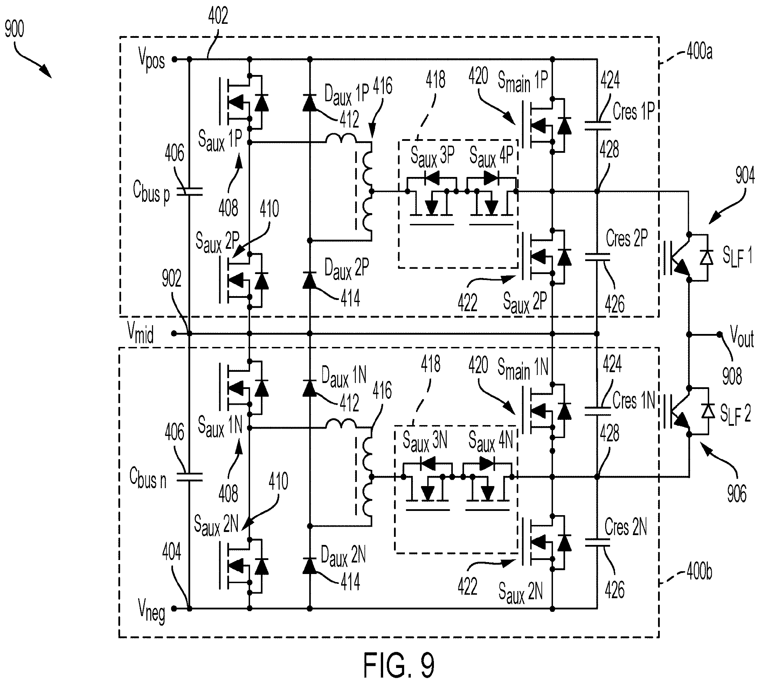

FIGS. 8 and 9 illustrate examples of the power converters 400, 500 that have been extended to function as multi-level power converters.

FIG. 8 illustrates a circuit diagram of a multi-level power converter 800 ("power converter 800") according to an example. The power converter 800 includes the elements of the power converter 400 of FIG. 4, except that the first capacitance 406 is illustrated as optional and may be (or may not be) omitted. The additions to the power converter 800 include a positive input node 802, a middle input node 804, a negative input node 806, a first input capacitance 810, a second input capacitance 812, a first input switching device 814, a second input switching device 816, a third input switching device 818, and a fourth input switching device 820.

The positive input node 802 is coupled to a first connection of the first input capacitance 810 and to a first connection of the first input switching device 814. The middle input node 804 is coupled to a second connection of the first input capacitance 804, a first connection of the second input capacitance 812, a second connection of the second input switching device 816, and a first connection of the third input switching device 818. The negative input node is coupled to a second connection of the second input capacitance 812 and to a second connection of the fourth input switching device 820.

The first connection of the first input switching device 814 is coupled to the positive input node 802 and to the first connection of the first input capacitance 810. The second connection of the first input switching device 814 is coupled to the positive voltage node 402 and to the first connection of the second input switching device 816. The first connection of the second input switching device 816 is coupled to the second connection of the first input switching device 814 and to the positive voltage node 402. The second connection of the second input switching device 816 is coupled to the first input of the third input switching device 818, the middle input node 804, the second connection of the first input capacitance 810, and the first connection of the second input capacitance 812. The first connection of the third input switching device 818 is coupled to the second connection of the second input switching device 816, the second connection of the first input capacitance 810, the middle input node 804, and the first connection of the second input capacitance 812. The second connection of the third input switching device 818 is coupled to the first connection of the fourth input switching device 820 and to the negative voltage node 404. The first connection of the fourth input switching device 820 is connected to the second connection of the third input switching device 818 and to the negative voltage node 404. The second connection of the fourth input switching device 820 is coupled to the negative input node 806 and to the second connection of the second input capacitance 812.

When the first input switching device 814 is on (that is, closed and conducting) and the other input switching devices 816-820 are off (that is, open and non-conducting), the positive voltage node 402 is pulled to the voltage of the positive input node 802. When the second input switching device 816 is on and the other input switching devices 814, 818, 820 are off, the positive voltage node 402 is pulled to the voltage of the middle input node 804. The voltage of the middle input node 804 may be determined at least in part by the input capacitances 810, 812 and the duty cycles of the input switching devices 814-820.

When the third input switching device 818 is on and the other input switching devices 814, 816, 820 are off, the negative voltage node 404 is pulled to the voltage of the middle input node 804. When the fourth input switching device 820 is on and the other input switching devices 814-818 are off, the negative voltage node 404 is pulled to the voltage of the negative input node 806.

While these examples give the effect when only one of the input switching devices 814-820 is on, multiple input switching devices 814-820 may be turned on at the same time. For example, to connect the negative voltage node 404 to the negative input node 806 simultaneously with connecting the positive voltage node 402 to the middle input node 804 could be accomplished by turning on the second input switching device 816 and fourth input switching device 820 and turning off the other two input switching devices 814, 818.

A controller, such as the controller 112 of FIG. 1, may control the input switching devices 814-820, and may thereby control the voltage level of the positive voltage node 402 and the negative voltage node 404 by selectively coupling the positive voltage node 402 to the positive input node 802 and/or the middle input node 804, and by selectively coupling the negative voltage node 404 to the middle input node 804 and/or the negative input node 806.

FIG. 9 illustrates a circuit diagram of a multi-level power converter 900 ("power converter 900") according to an example. The power converter 900 includes a first power converter 400a and a second power converter 400b which are both similar to the power converter 400 of FIG. 4, except in a few respects. Instead of the first power converter 400a having a negative voltage node and the second power converter 400b having a positive voltage node, instead those nodes are combined into a middle voltage node 902. That is, with reference to the power converter 400 of FIG. 4, for the first power converter 400a, the negative voltage node 404 is replaced with a middle voltage node 902, and for the second power converter 400b, the positive voltage node 402 is replaced with the middle voltage node 902. Alternatively, the middle voltage node 902 may be similar to the negative voltage node 404 of the first power converter 400a and to the positive voltage node 402 of the second power converter 400b. It will be appreciated that the structure of the power converters 400a, 400b may be similar or identical to the structure of the power converter 400 of FIG. 4 except that two such power converters 400 have been coupled together.

Furthermore, the power converter 900 includes a first output switching device 904, a second output switching device 906, and a combined output 908. A first connection of the first output switching device 904 is coupled to the output 428 of the first power converter 400a, and a second connection of the first output switching device 904 is coupled to the combined output 908. A first connection of the second output switching device 906 is coupled to the combined output 908. A second connection of the second output switching device 906 is coupled to the output 428 of the second power converter 400b.

A controller, such as the controller 112, may control the third and fourth switching devices 420, 422 of the power converters 400a, 400b to selectively couple the outputs 428 of the power converters 400a, 400b to the positive, middle, or negative voltage nodes 402, 902, 404. The controller 112 may also control the first and second output switching devices 904, 906 to selectively couple the combined output 908 to one or more of the outputs 428 of the first power converter 400a and/or second power converter 400b.

In particular, by turning on the third switching device 420 of the first power converter 400a and leaving off the fourth switching device 422 of both power converters 400a, 400b and the third switching device 420 of the second power converter 400b, the output 428 of the first power converter 400a may be selectively coupled to the positive voltage node 402. By turning on the fourth switching device 420 of the first power converter 400a and leaving off the third switching devices 420 of both power converters 400a, 400b and leaving off the fourth switching device 422 of the second power converter 400b, the output 428 of the first power converter 400a may be coupled to the middle voltage node 902.

By turning on the third switching device 420 of the second power converter 400b and leaving off the fourth switching device 422 of both power converters 400a, 400b and the third switching device 420 of the first power converter 400a, the output 428 of the second power converter 400b may be selectively coupled to the positive voltage node middle voltage node 902. By turning on the fourth switching device 420 of the second power converter 400b and leaving off the third switching devices 420 of both power converters 400a, 400b and leaving off the fourth switching device 422 of the first power converter 400a, the output 428 of the second power converter 400b may be coupled to the negative voltage node 404.

By turning on the first output switching device 904 and turning off the second output switch 906, the combined output 908 may be coupled to the output 428 of the first power converter 400a and thereby be pulled to the voltage of said output 428. By turning on the second output switching device 906 and turning off the first output switching device 904, the combined output 908 may be coupled to the output 428 of the second power converter 400b and thereby pulled to the voltage of said output 428.

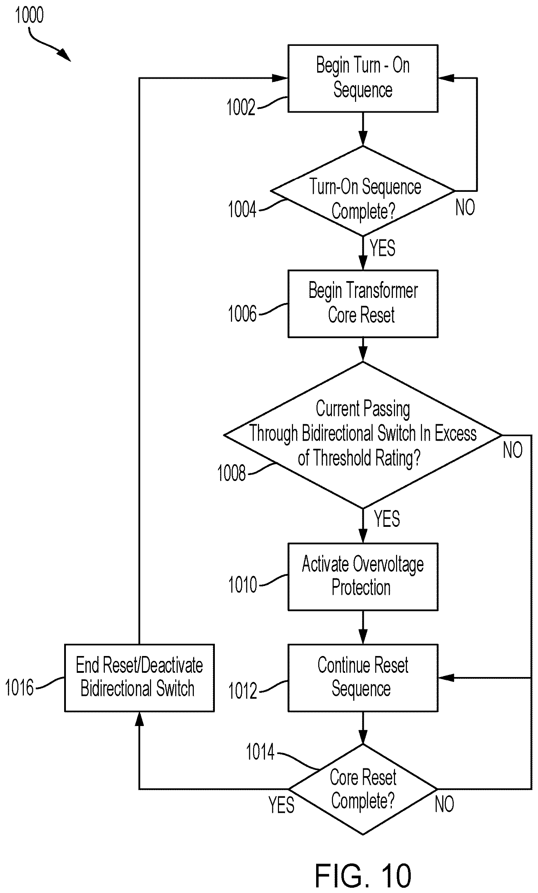

FIG. 10 illustrates a process 1000 for operating a power converter according to an example. For example, the process 1000 may be implemented to operate any one or more of the power converters 400, 500, 800, and/or 900. For ease of reference and convenience of understanding, the power converter 500 will be used as an example below, but the process 1000 may apply to any and/or all of the power converters 400, 500, 800, 900. For clarity, only the controller 112 is referred to below. In other examples, however, the process 1000 may also be executed by control circuitry such as the control circuitry 548.

At act 1002, a controller, such as the controller 112 and/or the control circuitry 548, begins a turn-on sequence of the power converter 500. In some examples, the turn-on sequence may be part of the switching cycle of the power converter 500. For example, the turn-on sequence may correspond to a time at which the states of switching devices are changed such that current at the output 546 of the power converter 500 (and/or the current through an LC filter coupled to the output 546 of the power converter 500) begins to rise. A corresponding reset sequence or turn-off sequence may, in turn, refer to a period of time when the current at the output 546 begins to drop. In some examples, the turn-on sequence and reset sequence together or individually may take less than 1µs to occur and/or complete.

The turn-on sequence may include providing a relatively large voltage across the transformer 526. In some examples, during the entirety of the turn-on sequence, a pulse with a magnitude equal or approximately equal to the full DC bus voltage (that is, equal to the difference between the positive and negative voltage busses 552, 544) may be provided across the transformer 526. This pulse helps to facilitate operation of the power converter 500 by, for example, magnetizing the transformer core of the transformer 526. The process 1000 may then continue to act 1004.

At act 1004, the controller 112 determines whether the turn-on sequence is complete. The controller 112 may determine that the turn-on sequence is complete by using the sensors 124 to monitor characteristics of the power being provided to the power converter 500. Such characteristics may include voltage levels, current levels, power phase, harmonic components, and so forth. The controller 112 may also monitor the saturation and/or magnetization of the transformer 526. In some examples, the turn-on sequence may take a set amount of time or have abort conditions, in which case the controller 112 may determine whether the set amount of time has passed (indicating that the turn-on sequence is complete) or whether an abort condition, such as a fault elsewhere in the power system, has occurred (indicating that the turn-on sequence has or should end), and so forth. Regardless of the method, if the controller 112 determines that the turn-on sequence has completed (1004 YES), the process 1000 may continue to act 1006. If the controller 112 determines that the turn-on sequence is not complete (1004 NO), the process 1000 may return to act 1002.

At act 1006, the controller 112 may control the power converter 500 to begin a reset sequence. The reset sequence may involve providing a reset pulse for the transformer 526, the reset pulse having a relatively low magnitude compared to the pulse of the turn-on sequence, but having a longer duration than the pulse of the turn-on sequence. In some examples, the reset pulse will have a duration of sufficient length such that the volt-second-area of the pulse of the turn-on sequence and the volt-second-area of the pulse of the reset sequence are equal or approximately equal to one another. The purpose of the reset pulse is to safely demagnetize and/or desaturate the transformer core of the transformer 526 so that the transformer 526 will be ready for the next PWM cycle when another large turn-on pulse will be provided. To provide the reset pulse, a pulse of current may be provided from and/or by the transformer 518 through the bidirectional switch 528. This pulse of current may correspond to the reset pulse and/or may be the reset pulse. The process 1000 may then continue to act 1008.

At act 1008, the controller 112 may determine whether current passing through the bidirectional switch 528 exceeds a threshold current level. The controller 112 may determine whether the current exceeds the threshold current level using the sensors 124. As illustrated in FIG. 4, the bidirectional switch 528 may have a gate driver 552 that is, in turn, driven by an OR-gate 550, and the OR-gate 550 may be driven by signals from the first input 502 and/or second input 504. Signals from the first input 502 and/or second input 504 may be controlled by the controller 112 in some examples. Thus, the control circuitry 548 may be the circuitry most proximately responsible for controlling the bidirectional switch 528, and the controller 112 may control the control circuitry 548 and the bidirectional switch 528. In various examples, direct control of either the control circuitry 548 or bidirectional switch 528 by the controller 112 is also possible.

If the controller 112 determines that the current pulse exceeds the threshold current level (1008 YES), the process 1000 may continue to act 1010. If the controller 112 determines that the current pulse does not exceed the threshold current level (1008 NO), the process 1000 may continue to act 1012.

At act 1010, the controller 112 activates the overvoltage protection. As with act 1008, the overvoltage protection may be automatic or provided by an analog system rather than being directly turned on or off by the controller 112. For example, in FIGS. 7A-7D the switching systems 700, 730, 750, 760 use analog components (including, for example, the overvoltage limiters 701b, 731b, 752, 762) to provide overvoltage protection, and do not require control signals. However, active overvoltage protection systems (that is, overvoltage protection systems that use control signals) may also be used to provide overvoltage protection. In some examples, the various diodes 704, 708, 714-18, 722 734, 738 clamp the voltage and/or current conducting through the bidirectional switch 528 to a maximum amount. For example, the overvoltage limiter 731b in the form of a bidirectional TVS diode may require that the voltage drop across said diodes be limited to the reverse (or breakdown) voltage of the bidirectional TVS diode. Similarly, the diodes of the overvoltage limiter 752 may be Zener diodes and may only conduct when a reverse or breakdown voltage is reached. In common to any of the diode-based solutions, once the overvoltage limiters 701b, 731b, 752 are conducting, the current conducting through the overvoltage limiters 701b, 731b, 752 may increase far faster than the voltage across the overvoltage limiters 701b, 731b, 752. Because the overvoltage limiter 530 is generally coupled in parallel with the bidirectional switch 528, the voltage across the bidirectional switch 528 may remain around the voltage necessary to get the overvoltage limiter 530 to begin conducting regardless of the level of the current pulse or other pulses in the power converter 500. The process 1010 may then continue to act 1012.

At act 1012, the controller 112 continues the reset sequence with the overvoltage protection in place and in use as needed, for example, by continuing to provide the reset pulse until the volt-second-area of the reset pulse equals or is approximately equal to the volt-second-area of the turn-on pulse. The process 1000 may then continue to act 1014.

At act 1014, the controller 112 determines whether the transformer core of the transformer 526 is fully desaturated and/or demagnetized. The controller 112 may use the sensors 124 to determine if the transformer 526 has demagnetized and/or desaturated by sensing a voltage or current through the transformer 526, or-if the reset sequence takes a predetermined amount of time-may determine that the predetermined amount of time has elapsed. If the controller 112 determines the reset sequence is not complete (1014 NO), the process 1000 returns to act 1012. If the controller 112 determines the reset sequence is complete (1014 YES), the process 1000 continues to act 1016.

At act 1016, the controller 112 discontinues the reset pulse (if not already discontinued) and turns off the bidirectional switch 528. The process 1000 may then continue to act 1002.

Examples of the methods and systems discussed herein are not limited in application to the details of construction and the arrangement of components set forth in the description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms. In addition, in the event of inconsistent usages of terms between this document and documents incorporated herein by reference, the term usage in the incorporated features is supplementary to that of this document; for irreconcilable differences, the term usage in this document controls.

Various controllers, such as the controller 112, may execute various operations discussed above. Using data stored in associated memory and/or storage, the controller 112 also executes one or more instructions stored on one or more non-transitory computer-readable media, which the controller 112 may include and/or be coupled to, that may result in manipulated data. In some examples, the controller 112 may include one or more processors or other types of controllers. In one example, the controller 112 is or includes at least one processor. In another example, the controller 112 performs at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

The present disclosure may also relate to the following embodiments:
Embodiment 1. A switching system, comprising:
   a first input node;
   an output node;
   a transformer having a first terminal, a second terminal, and a middle tap, the first terminal coupled to the first input node via a first switch, and the second terminal coupled to the first input node via a first diode; and
   a bidirectional switch coupled to the middle tap and to the output node.
Embodiment 2. The switching system of embodiment 1 wherein the bidirectional switch includes a first switching device having a first connection, a second connection, and a first control connection, and a second switching device having a third connection, a fourth connection, and a second control connection, the first connection being coupled to the middle tap, the second connection coupled to the third connection, and the fourth connection coupled to the output node.
Embodiment 3. The switching system of embodiment 2 wherein the bidirectional switch includes
   a first diode having a first anode and a first cathode, the first anode coupled to the second connection and the first cathode coupled to the first connection, and
   a second diode having a second anode and a second cathode, the second anode coupled to the third connection and the second cathode coupled to the fourth connection.
Embodiment 4. The switching system of embodiment 1 further comprising:
   a second input node;
   a second switch coupled between the second input node and the first terminal; and
   a second diode coupled between the second input node and the second terminal.
Embodiment 5. The switching system of claim 4 wherein the bidirectional switch includes one or more bidirectional switch switching devices, and the first switch and second switch include one or more switch switching devices, the one or more switch switching devices having a higher voltage rating than the one or more bidirectional switch switching devices.
Embodiment 6. The switching system of embodiment 4 further comprising:
   a first switch diode coupled in parallel with the first switch, the first switch diode having an anode coupled to the first terminal and a cathode coupled to the first input, and
   a second switch diode coupled in parallel with the second switch, the second switch diode having an anode coupled to the second input and a cathode coupled to the first terminal.
Embodiment 7. The switching system of embodiment 1 further comprising:
   a second input node;
   a first output switch coupled between the output node and the first input node; and
   a second output switch coupled between the output node and the second input node.
Embodiments 8. The switching system of embodiment 7 further comprising:
   a first switch diode coupled in parallel with the first output switch, the first switch diode having an anode coupled to the first terminal and a cathode coupled to the first input, and
   a second switch diode coupled in parallel with the second output switch, the second switch diode having an anode coupled to the second input and a cathode coupled to the first terminal.
Embodiment 9. The switching system of embodiment 1 further comprising:
   a second input node; and
   a first impedance, a second impedance, and a third impedance, the first impedance coupled between the first input node and the second input node, the second impedance coupled between the first input node and the output node, and the third impedance coupled between the output node and the second input node.
Embodiment 10. The switching system of embodiment 9 wherein the first impedance, the second impedance, and the third impedance each include at least one capacitor.
Embodiment 11. The switching system of embodiment 1 further comprising:
   a second input node;
   a second switch coupled between the second input node and the first terminal; and
   a control system configured to control at least one of the first switch, the second switch, or the bidirectional switch.
Embodiment 12. The switching system of embodiment 11 wherein the control system further includes:
   a first control input configured to receive a first control signal,
   a second control input configured to receive a second control signal, and
   an overvoltage limiter coupled to the bidirectional switch.
Embodiment 13. The switching system of embodiment 12 wherein the overvoltage limiter includes a bidirectional diode coupled between first and second terminals of the bidirectional switch.
Embodiment 14. The switching system of embodiment 12 wherein the overvoltage limiter includes a metal oxide varistor coupled between first and second terminals of the bidirectional switch.
Embodiment 15. The switching system of embodiment 12 wherein the overvoltage limiter includes
   a control driver coupled to control connections of switching devices of the bidirectional switch;
   a first switch diode coupled to the first terminal of the bidirectional switch, a second switch diode coupled to the second terminal of the bidirectional switch, and a third switch diode coupled to the first switch diode and to the second switch diode; or
   one or more resistors coupled to the control connections of the switching devices of the bidirectional switch.
Embodiment 16. An inverter comprising:
   one or more switching systems, each switching system respectively including a first input node, an output node, a transformer having a first terminal, a second terminal, and a middle tap, the first terminal coupled to the first input node, the second terminal coupled to the first input node, and the middle tap coupled to the output node via a bidirectional switch.
Embodiment 17. The inverter of embodiment 16 wherein each switching system of the one or more switching systems further respectively includes a second input node coupled to the first terminal and to the second terminal, and wherein the inverter further comprises:
   a positive input node;
   a negative input node;
   a midpoint node;
   a first capacitor coupled between the positive input node and the midpoint node;
   a second capacitor coupled between the negative input node and the midpoint node;
   a first switching device coupled between the first input node and the positive input node;
   a second switching device coupled between the first input node and the midpoint node;
   a third switching device coupled between the second input node and the midpoint node; and
   a fourth switching device coupled between the negative input node and the second input node.
Embodiment 18. The inverter of embodiment 16 wherein the one or more switching systems include a first switching system and a second switching system, and wherein a second input node of the first switching system is coupled to a first input node of the second switching system.
Embodiments 19. The inverter of embodiment 18 further comprising:
   a first switching device coupled to the output node of the first switching system;
   a second switching device coupled to the output node of the second switching system; and
   a voltage output node coupled between the first switching device and the second switching device.
Embodiment 20. A non-transitory computer-readable medium containing thereon computer-executable instructions that, when executed by at least one processor, cause the at least one processor to control a soft switching system including an inverter, a transformer, and a bidirectional switch, by:
   controlling the inverter to begin a startup sequence, the startup sequence including providing a startup voltage to the transformer and activating the bidirectional switch coupled to a middle tap of the transformer; and
   responsive to the startup sequence completing, causing a transformer core reset of the transformer, the transformer core reset including
      controlling the inverter to provide a reset voltage across the transformer for a first period of time, the reset voltage having a lower magnitude than the startup voltage,
      deactivating the bidirectional switch coupled to the middle tap of the transformer, and
      activating the bidirectional switch after an end of the first period of time.

Having thus described several aspects of at least one embodiment, it is to be appreciated various alterations, modifications, and improvements will readily occur to those skilled in the art. Such alterations, modifications, and improvements are intended to be part of, and within the spirit and scope of, this disclosure. Accordingly, the foregoing description and drawings are by way of example only.

## Claims

1. A switching system, comprising:
a first input node;
an output node;
a transformer having a first terminal, a second terminal, and a middle tap, the first terminal coupled to the first input node via a first switch, and the second terminal coupled to the first input node via a first diode; and
a bidirectional switch coupled to the middle tap and to the output node.

2. The switching system of claim 1 wherein the bidirectional switch includes a first switching device having a first connection, a second connection, and a first control connection, and a second switching device having a third connection, a fourth connection, and a second control connection, the first connection being coupled to the middle tap, the second connection coupled to the third connection, and the fourth connection coupled to the output node wherein, in particular, the bidirectional switch includes
a first diode having a first anode and a first cathode, the first anode coupled to the second connection and the first cathode coupled to the first connection, and
a second diode having a second anode and a second cathode, the second anode coupled to the third connection and the second cathode coupled to the fourth connection.

3. The switching system of claim 1 further comprising:
a second input node;
a second switch coupled between the second input node and the first terminal; and
a second diode coupled between the second input node and the second terminal.

4. The switching system of claim 3 wherein the bidirectional switch includes one or more bidirectional switch switching devices, and the first switch and second switch include one or more switch switching devices, the one or more switch switching devices having a higher voltage rating than the one or more bidirectional switch switching devices.

5. The switching system of claim 3 further comprising:
a first switch diode coupled in parallel with the first switch, the first switch diode having an anode coupled to the first terminal and a cathode coupled to the first input, and
a second switch diode coupled in parallel with the second switch, the second switch diode having an anode coupled to the second input and a cathode coupled to the first terminal.

6. The switching system of claim 1 further comprising:
a second input node;
a first output switch coupled between the output node and the first input node; and
a second output switch coupled between the output node and the second input node wherein, in particular the switching system further comprises:
a first switch diode coupled in parallel with the first output switch, the first switch diode having an anode coupled to the first terminal and a cathode coupled to the first input, and
a second switch diode coupled in parallel with the second output switch, the second switch diode having an anode coupled to the second input and a cathode coupled to the first terminal.

7. The switching system of claim 1 further comprising:
a second input node; and
a first impedance, a second impedance, and a third impedance, the first impedance coupled between the first input node and the second input node, the second impedance coupled between the first input node and the output node, and the third impedance coupled between the output node and the second input node, wherein, in particular, the first impedance, the second impedance, and the third impedance each include at least one capacitor.

8. The switching system of claim 1 further comprising:
a second input node;
a second switch coupled between the second input node and the first terminal; and
a control system configured to control at least one of the first switch, the second switch, or the bidirectional switch.

9. The switching system of claim 8 wherein the control system further includes:
a first control input configured to receive a first control signal,
a second control input configured to receive a second control signal, and
an overvoltage limiter coupled to the bidirectional switch.

10. The switching system of claim 9 wherein the overvoltage limiter includes a bidirectional diode coupled between first and second terminals of the bidirectional switch or the overvoltage limiter includes a metal oxide varistor coupled between first and second terminals of the bidirectional switch.

11. The switching system of claim 9 wherein the overvoltage limiter includes
a control driver coupled to control connections of switching devices of the bidirectional switch;
a first switch diode coupled to the first terminal of the bidirectional switch, a second switch diode coupled to the second terminal of the bidirectional switch, and a third switch diode coupled to the first switch diode and to the second switch diode; or
one or more resistors coupled to the control connections of the switching devices of the bidirectional switch.

12. An inverter comprising:
one or more switching systems, each switching system being according to any one of the preceding claims.

13. The inverter of claim 12 wherein each switching system of the one or more switching systems further respectively includes a second input node coupled to the first terminal and to the second terminal, and wherein the inverter further comprises:
a positive input node;
a negative input node;
a midpoint node;
a first capacitor coupled between the positive input node and the midpoint node;
a second capacitor coupled between the negative input node and the midpoint node;
a first switching device coupled between the first input node and the positive input node;
a second switching device coupled between the first input node and the midpoint node;
a third switching device coupled between the second input node and the midpoint node; and
a fourth switching device coupled between the negative input node and the second input node.

14. The inverter of claim 12 wherein the one or more switching systems include a first switching system and a second switching system, and wherein a second input node of the first switching system is coupled to a first input node of the second switching system, wherein in particular the inverter further comprises:
a first switching device coupled to the output node of the first switching system;
a second switching device coupled to the output node of the second switching system; and
a voltage output node coupled between the first switching device and the second switching device.

15. A non-transitory computer-readable medium containing thereon computer-executable instructions that, when executed by at least one processor, cause the at least one processor to control a soft switching system including an inverter, a transformer, and a bidirectional switch, by:
controlling the inverter to begin a startup sequence, the startup sequence including providing a startup voltage to the transformer and activating the bidirectional switch coupled to a middle tap of the transformer; and
responsive to the startup sequence completing, causing a transformer core reset of the transformer, the transformer core reset including
controlling the inverter to provide a reset voltage across the transformer for a first period of time, the reset voltage having a lower magnitude than the startup voltage,
deactivating the bidirectional switch coupled to the middle tap of the transformer, and
activating the bidirectional switch after an end of the first period of time.
